# EUROPEAN PATENT SPECIFICATION

(11) **EP 1 275 304 B1**
(45) Date of publication and mention of the grant of the patent: **24.03.2004**
(21) Application number: 01306053.8
(22) Date of filing: 13.07.2001
(51) Int. Cl.: A22B 5/00, A22B 5/10

(54) **Tool, device and method for removing tissue parts from the surface of carcass parts**
Gerät, Vorrichtung und Verfahren zum Entfernen von Gewebeteilen von der Oberfläche von Schlachttierkörperteilen
Outil, dispositif et procédé à enlever des parties tissulaires de la surface des parties d'une carcasse

(43) Date of publication of application: 15.01.2003
(73) Proprietor: SLAGTERIERNES FORSKNINGSINSTITUT, DK-4000 Roskilde (DK)
(72) Inventor: Hansen, Niels Worsoe, 4320 Lejre (DK); Hassing, Jens, 3520 Farum (DK); Nielsen, Jeans Ulrich, 2880 Bagsvaerd (DK); Robaek-Olsson, Lars, 3050 Humlebaek (DK)
(74) Representative: Bayliss, Geoffrey Cyril

(56) References cited:
- EP-A- 1 055 368
- US-A- 4 993 112

## Description

The present invention relates to a tool, a device and a method for removing tissue parts from the surface of carcass parts. Tissue parts mean in particular undesirable tissue parts ("contamination") such as glands, sinews, fat remnants and veins.

Tools for removing tissue parts from carcasses are known from various patents.

US 4,993,112 (Brunet et al.) describes a manual tool for cutting fatty tissue from a carcass. The tool has a cylindrical housing enclosing a rotating cylinder with helical cutting edges. When an opening in the side of the housing is held against a surface of fatty tissue on a carcass, the rotating edges cut off a thickness of fatty tissue. The fatty tissue is removed from the housing via an opening at one end.

US 4,184,461 (Geo. A. Hormel) describes a manual tool for cutting the skin from a carcass. The tool has a rotating cylinder set with teeth. On the fixed part of the tool is a cutting blade at a small distance from the rotating cylinder. When the tool is moved along the carcass with the cutting blade pressed against the surface, the cylinder teeth draw the skin against the cutting blade which then cuts off a strip of skin.

DK 157.775 B (Slagteriernes Forskningsinstitut) describes a tool for cleaning the surface of carcasses. The tool has a wheel on which cleaning fingers are fitted peripherally and axially. At one end of the fingers is a scraper blade while the other end is suspended on pivoting axles parallel to the rotation axis of the wheel. When the wheel rotates, the cleaning fingers swing out and away from the rotation axis of the wheel and the scraper blades come into contact with and scrape along the surface of the carcass and scrape off any contamination. The tool is harmless to the actual surface retaining the membranes, but it is only able to remove contamination, which can be scraped off and thus has a limited sphere of application.

An object of the present invention is to provide a tool able to remove undesirable tissue parts from the surface of a carcass part by cutting them from the surface without causing damage to the surface itself.

The tool according to the invention is characterised in that it comprises:
- a housing with an internal cavity,
- a first opening through the wall of the housing with a stationary cutting edge at the internal side of the housing,
- a cutting head arranged in the housing cavity opposite the first opening, said cutting head having one or more cutting blades which, when the cutting head is rotated round an axis of rotation, interact with the stationary cutting edge and cut through tissue parts between the stationary cutting edge and a cutting edge on a cutting blade,
- a second opening through the wall of the housing, and
- a suction device connected to this second opening to create an airflow passing through the first opening in the housing and into the housing's internal cavity.

The tool according to the invention can be used for cleaning the surface of a carcass part. It is placed on the surface with the first opening facing the surface and is moved along the surface. The air flow created by the suction device sucks the tissue parts on the surface of the carcass part into the opening and the cutting edge of the or each cutting blade, interacting with the stationary cutting edge, cuts the tissue parts from the surface. This is done without causing any damage to the actual surface of the carcass part, as the interacting cutting edges are located at the inside of the housing and cannot affect the actual surface of the carcass part. Cleaning is therefore effective and gentle to the actual surface. The airflow ensures that the detached tissue parts are sucked away from the operations zone and out of the housing.

The cutting edge on the or each cutting blade and the stationary cutting edge preferably extend in the direction of the axis of revolution.

The stationary cutting edge may extend mainly in parallel with the axis of revolution.

The cutting edge(s) on the head may extend at an angle to the axis of revolution, preferably such that the cutting interaction between the stationary cutting edge and a rotating cutting edge takes place successively along these cutting edges.

The cutting edge(s) on the head preferably have mainly a helical course in the direction of the axis.

The cutting edge(s) on the cutting head may on one half of the head lying on one side of a plane at right-angles to the axis, extend at an angle to one side, and on the other half of the head lying on the other side of the plane, extend at an equal angle in the opposite direction.

The angle between the leading side of a blade at the blade's cutting edge and the tangent to the surface of revolution, which the cutting edge describes in rotation, seen in a plane at right angles to the axis of rotation, may be in the range 45-90°, and preferably in the range 55-75°.

Preferably the first opening in the housing, the cutting head and the second opening are arranged such that tissue parts on the surface of a carcass part opposite the first opening during operation are sucked into the first opening, that the connection between the tissue parts and the surface are cut through by the interaction between the stationary cutting edge and the cutting edge(s) on the head and that the detached tissue parts are removed from the cutting head and the housing by the airflow created by the suction device.

In a preferred embodiment of the tool, the outer surfaces of the housing at the first opening and/or slide surfaces mounted on the housing at the first opening constitute the tool's contact surface with the carcass part during use, and the cutting edge(s) on the cutting head are behind a plane containing this contact surface.

The minimum distance between the cutting edge (s) and the plane is preferably 1-8 mm.

The tool may if desired include more than one first opening with a stationary cutting edge, e.g. two or three openings each with their cutting edge, or one first opening with two or three parallel cutting edges, such that the removal operation is repeated several times when the tool is moved along the surface of a carcass part in a direction at right angles to the axis of revolution.

The cutting head may include one, two, three, four, five or six blades.

The suction device may for example consist of a fan mounted on the housing and creating a negative pressure inside it.

The cavity within the housing may take various forms; for instance it may have the form of a box or cylinder of revolution. The internal side of the housing may over large areas extend to the surface of revolution described by the cutting edges of the blades when the head rotates, or there may be a gap between the internal side of the housing and the said surface of revolution, provided that the stationary edge and the surface of revolution are so close that a cutting effect is achieved at the stationary edge when the head rotates.

The tool according to the invention may be used to clean the inside of a carcass conveyed on a slaughter line suspended from a gambrel or hooks. The carcass may be cut open in the abdomen, breast and neck, and organs may have been removed from the inside of the carcass. The head may have been cut off. The tool according to the invention is particularly suited for removing remnants or contamination, e.g. contamination in the inner neck area or heart fat left on the surface of a carcass after removal of organs. The tool is preferably for use on a split carcass where the carcass is conveyed as two associated halves separated or joined only at the snout with the rear legs fixed to a gambrel or hooks. The tool may be used on a split carcass without head, e.g. two halves connected in the neck fat.

The use of the tool is not limited to cleaning the neck area and removing heart fat. It can if desired be used to clean other external or internal surface parts of a carcass or carcass part, e.g. for removing remnants of leaf fat.

The tool may be moved by an operator or may be mounted in a device which automatically conveys the tool along the surface of a supported or fixed carcass part from which it is desired to remove tissue parts.

The device according to the invention for removing tissue parts from the surface of carcass parts is characterised in that it comprises a tool according to the invention, a holding or fixing arrangement for a carcass part and a mechanism for moving the tool opposite the arrangement, said mechanism holding the tool elastically so that the tool can move away from the arrangement when affected by a force away from it.

The holding or fixing arrangement in the device can be used to position and/or hold a carcass part conveyed on a slaughter line opposite the mechanism for moving the tool.

The device may include a sensor means for determining the position of an anatomical fixed point on a carcass part prior to use of the tool on this part in order to obtain cleaning adapted to the individual carcass part's anatomy or size. The sensor means may emit a position output to control mechanisms, which may serve to set the height of the tool or move the tool between extreme positions depending on output. The anatomical fixed point may be the forelegs, for instance if the internal neck area and the internal breast area are to be processed, as there is a correlation between the location of the forelegs and the breast bone/neck.

By means of the device according to the invention the tool may be moved into contact with the inner breast part in the diaphragm area with the first opening facing the surface and the tool may then be moved downwards past the neck area in a direction mainly at right angles to the axis of revolution of the cutting head. The device may in the same operation thus remove heart fat and clean the inner surface of the neck.

The method according to the invention for removing tissue parts from the surface of carcass parts is characterised in that a tool according to the invention is moved along and in contact with the surface with its opening facing the surface, while the or each blade of the cutting head is rotated past the stationary edge and the suction device creates an airflow passing through the first opening in the housing and into the housing's internal cavity.

In the present case, the expression "carcass" includes particularly the carcasses of pigs and cattle. The tool can be used on whole carcasses, split carcasses or parts of carcasses, e.g. whole carcasses freed of inner organs, and also possibly the head, or split carcasses with or without head (but including jaw muscles) or on parts of carcasses for cleaning the surface.

By way of example, specific embodiments in accordance with the invention are described with reference to the accompanying drawings, in which:-
Fig. 1 shows an embodiment of a tool according to the invention for removing heart fat and cleaning the neck in a split pig carcass, seen in section,
Fig.2 shows the tool of Fig.1 seen from the end,
Fig.3 shows the tool of Fig.1 seen from above,
Fig.4 shows a cross section through the tool of Fig.1,
Fig.5 shows another embodiment of a tool according to the invention, seen in cross section,
Fig.6 shows the tool of Fig.5 seen from the end,
Fig.7 shows the tool of Fig.5 seen from above,
Fig.8a and 8b show a blade in the tool of Fig.5
Fig. 9 shows a mechanism for moving a tool according to the invention and a holding arrangement for positioning carcass halves opposite the mechanism, and
Fig. 10 shows the mechanism and positioned carcass halves seen from another side.

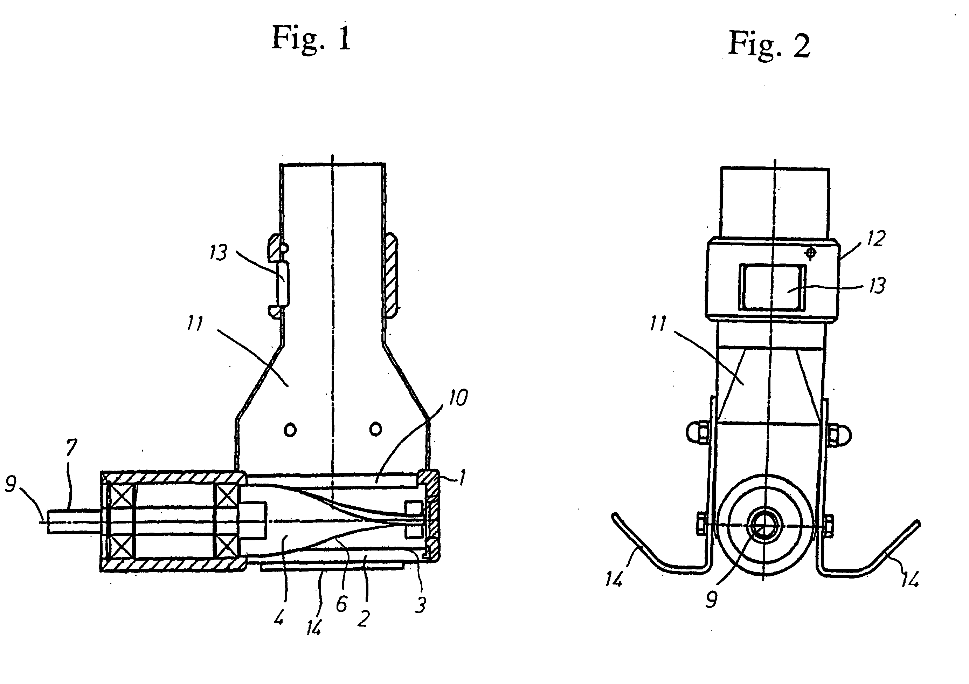

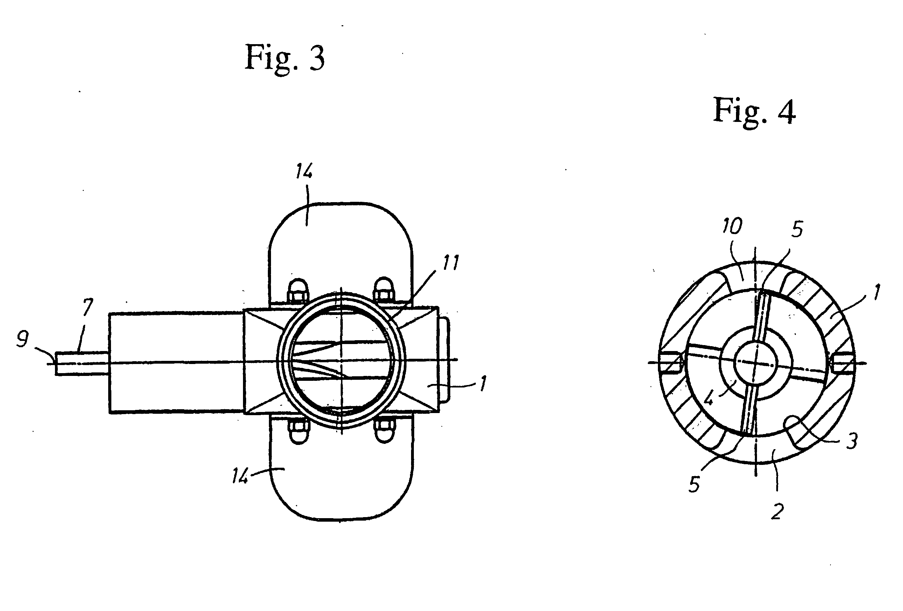

The tool in Figs. 1-4 includes a housing 1 with a cavity having the form of a cylinder of revolution. In the wall of the housing is a gap 2 with an internal cutting edge 3. Inside the housing is a cutting head 4 with two blades 5, each with a helical cutting edge 6 adjacent to the internal wall of the housing. The cutting head is mounted on the shaft 7 of a motor located as an extension of housing 1. The head rotates round an axis of revolution 9. The helical cutting edges 6 interact with the internal edge 3 of the gap when the cutting head is rotated by motor, thus creating a cutting effect between the rotating cutting edges 6 and the stationary cutting edge 3 of the gap.

In the upper part of the housing wall is a gap 10 with an internal edge corresponding to edge 3 in the lower part of the housing. Gaps 2 and 10 are preferably parallel with axis of revolution 9.

Opposite gap 10 in the upper part of the housing is a nozzle 11 connected to a suction device. Depending on how powerful a suction is desired, a sleeve 12 with a hole may be turned so as to more or less cover a corresponding hole 13 in nozzle 11.

On housing 1 are mounted two plates 14 with slide surfaces, which are in contact with the carcass part surface during cleaning. The plates ensure that the rotating cutting edges 6 does not come so close to the actual surface as to damage it.

In operation, the suction device creates an airflow through gap 2 causing tissue parts on I the surface of the carcass part to be sucked into housing 1 and cut off between the rotating cutting edges 6 on the head and internal edge 3 of the gap. The detached tissue parts are sucked out via the upper gap 10 and nozzle 11.

The working negative pressure in the housing is preferably between 50 and 400 mmWC (hPa).

The tool can, for example, be used to remove heart fat and clean the neck area in a suspended carcass half in the same operation, by being moved from diaphragm down along the internal side to the neck and onwards.

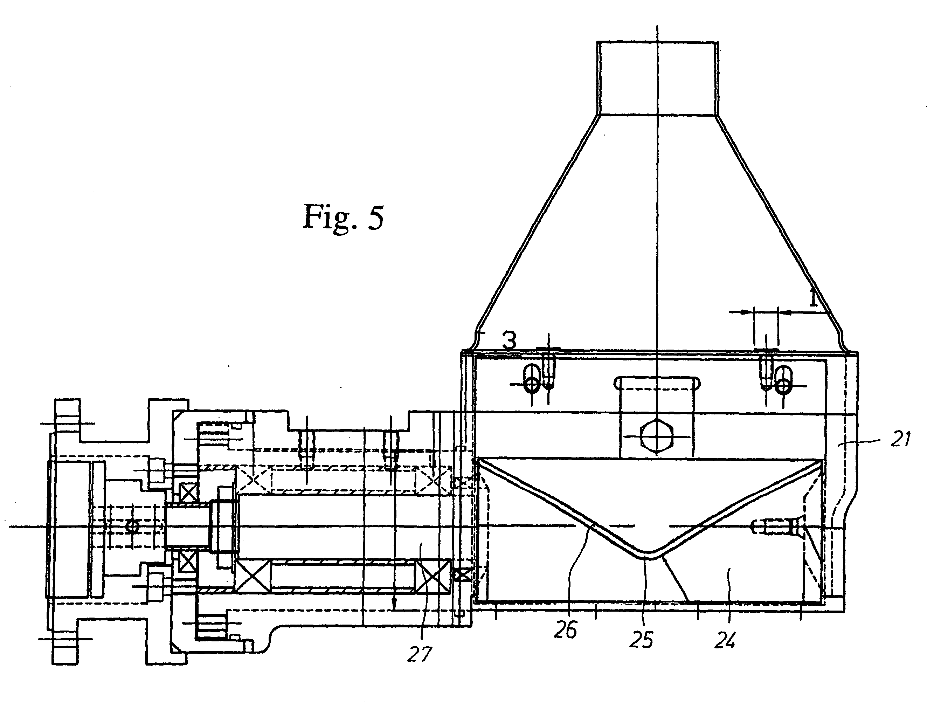

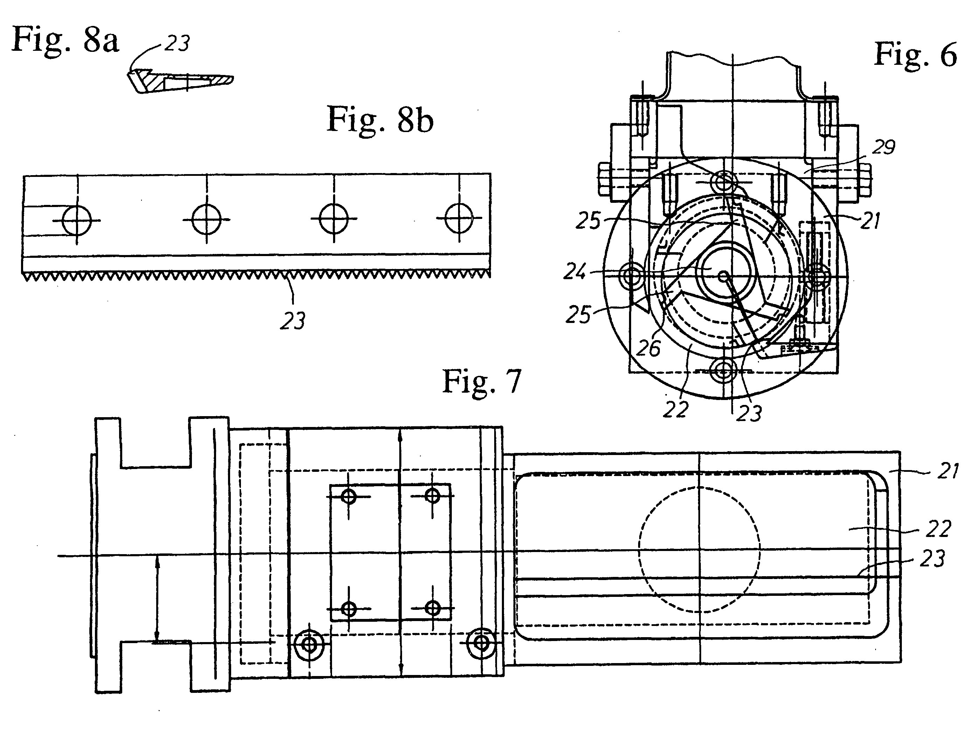

The tool in Figs. 5-8 includes a housing 21 with an internal box-shaped cavity. In a first opening 22 in the housing wall is mounted a cutting blade with a cutting edge 23 at the housing's internal side. The edge may be straight or it may have a zigzag shape as shown in Figs. 8a and 8b where one edge of the blade is toothed.

In housing 21 is a cutting head 24 with three blades or projections 25. These each have a cutting edge 26 running diagonally in opposite directions on either half of head 24 so that the connections to be cut through will tend towards the middle of the cutting head. The head is mounted on a shaft 27 which can be rotated by a motor.

When the head is rotated, cutting edges 26 interact with cutting edge 23 as they move close to the cutting edge and are here able to execute a cutting function running successively from each end of the head in towards the middle.

Head 24 is mounted so far inside the housing that the rotating cutting edges do not come into contact with the actual surface of the carcass part to be cleaned when the tool is applied with the edge surface round the first opening in the housing resting on the surface of the carcass part.

At the other end from the first opening 22 the housing has another opening 29, on which is mounted a nozzle linked to a suction device.

In operation, cutting head 24 is rotated by the motor and air is sucked into the housing's internal cavity through the first opening 22 and out of the housing through the second opening 29 to the suction device. The tool is placed on the surface to be cleaned and it is moved along or down the surface. The tissue parts on the surface are sucked into the first opening 22 and the connections of the tissue parts with the surface are cut through by the interaction between the stationary cutting edge 23 and the cutting edges 26 on the rotating head. The detached tissue parts are sucked out through opening 29 to a collection container at the suction device. In use the tool is applied for example to the inside of a suspended carcass half at the diaphragm and moved with shaft 27 across the direction of movement down to the neck, and from there onwards. In doing so, the carcass half is cleaned of heart fat in the breast region and tissue parts etc. in the neck area in a single working operation. The movement may be performed by an operator or a manipulator.

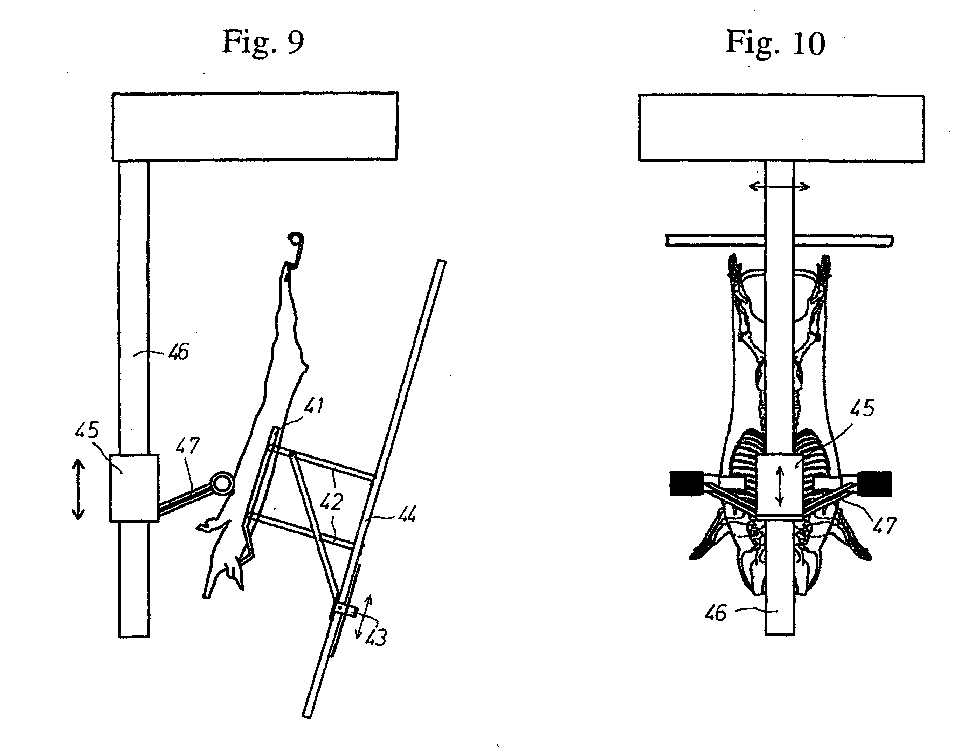

Figs. 9-10 show a device for automatic cleaning of the surface of carcass halves by means of tools according to the invention. To achieve sufficiently good cleaning it is important for the carcass to be placed in a well-defined position in relation to the tool. Fig. 9 shows a double holding device 41, which moves outwards to position associated carcass halves conveyed on a slaughter line as the carcasses are opposite the device. The holding device is moved towards the carcass by a mechanism of pivoting arms 42 actuated by a carriage 43 which can be slid along a guide 44.

Two tools, for example of the design shown in Figs. 1-4 or 5-8, can be moved up and down against carcass halves by means of a bracket 45 travelling on a column guide 46. The tools are mounted on arms 47, which are elastic in the direction of the bracket, ensuring that the tools lie against the carcass surface with a certain working pressure and thus follow the surface contours.

The device locates the tools on the inside of the carcass halves at the diaphragm in the abdominal side and moves them downwards along the carcass via the neck area and out past the jaw or jaw muscle. If necessary the procedure may be repeated in order to remove remaining contamination.

## Claims

1. Tool for removing tissue parts from the surface of carcass parts, **characterised in that** it comprises:
- a housing (1) with an internal cavity,
- a first opening (2) through the wall of the housing with a stationary cutting edge (3) at the internal side of the housing,
- a cutting head (4) arranged in the housing cavity opposite the first opening (2), said cutting head having one or more cutting blades (5) which, when the cutting head is rotated round an axis of revolution (9), interact with the stationary cutting edge (3) and cut through tissue parts between the stationary cutting edge (3) and a cutting edge (6) on a cutting blade (5),
- a second opening (10) through the wall of the housing, and
- a suction device (11) connected to the second opening to create an airflow passing through the first opening (2) in the housing into the housing's internal cavity.

2. Tool according to claim 1, **characterised in that** the cutting edge (6) on the or each cutting blade and the stationary cutting edge (3) extend in the direction of the axis of revolution (9).

3. Tool according to claim 1, **characterised in that** the stationary cutting edge (3) extends mainly in parallel with the axis of revolution (9).

4. Tool according to claim 1, **characterised in that** the cutting edge(s) (6) of head (4) extend at an angle to the axis of revolution (9), preferably such that the cutting interaction between the stationary cutting edge and a rotating cutting edge takes place successively along these cutting edges.

5. Tool according to claim 4, **characterised in that** the cutting edge(s) (6) on the head (5) mainly have a helical course in the direction of the axis (9).

6. Tool according to claim 4, **characterised in that** the cutting edge(s) on the cutting head on one half of the head lying on one side of a plane at right angles to the axis, extend at an angle to one side and on the other half of the head lying on the other side of the plane, extend at an equal angle in the opposite direction.

7. Tool according to claim 1, **characterised in that** the angle between the leading side of a blade (5) at the blade's cutting edge (6) and the tangent of the surface of revolution which the cutting edge describes in rotation, seen in a plane at right angles to the axis of revolution (9), is in the range 45-90°, and preferably in the range 55-75°.

8. Tool according to claim 1, **characterised in that** the first opening (2) in the housing, the cutting head (4) and the second opening (10) are arranged such that tissue parts on the surface of a carcass part opposite the first opening (2) during operation are sucked into the first opening, that the connections between the tissue parts and the surface are cut through by the interaction between the stationary cutting edge (3) and the cutting edge(s) (6) on the head (4) and that the detached tissue parts are removed from the cutting head (5) and the housing (1) by the airflow created by the suction device.

9. Tool according to claim 1, **characterised in that** the outer surfaces of the housing at the first opening (2) and/or slide surfaces (14) mounted on the housing at the first opening constitute the tool's contact surface with the carcass part during use and that the cutting edge(s) (6) on cutting head (4) are behind a plane containing this contact surface.

10. Tool according to claim 9, **characterised in that** the minimum distance of the cutting edge(s) (6) from this plane is 1-8 mm.

11. Device for removing tissue parts from the surface of carcass parts, **characterised in that** it comprises a tool according to claim 1, a holding or fixing arrangement for a carcass part and a mechanism for moving the tool opposite the arrangement, said mechanism holding the tool elastically so that the tool can move away from the arrangement when affected by a force away from it.

12. Method for removing tissue parts from the surface of carcass parts, **characterised in that** a tool according to claim 1 is moved along and in contact with the surface with its opening facing the surface, while the or each blade of the cutting head is rotated past the stationary edge and the suction device creates an airflow passing through the first opening (2) in the housing and into the housing's internal cavity.

## Revendications

1. Outil pour enlever des parties tissulaires de la surface de parties de carcasse, **caractérisé en ce qu'**il comporte :
- un boîtier (1) ayant une cavité intérieure,
- une première ouverture (2) située à travers la paroi du boîtier, ayant un bord de découpe fixe (3) au niveau du côté intérieur du boîtier,
- une tête de découpe (4) agencée dans la cavité de boîtier, opposée à la première ouverture (2), ladite tête de découpe ayant une ou plusieurs lames de découpe (5) qui, lorsque la tête de découpe est mise en rotation autour d'un axe de rotation (9), interagit avec le bord de découpe fixe (3) et découpe à travers des parties tissulaires situées entre le bord de découpe fixe (3) et un bord de découpe (6) de la lame de découpe (5),
- une seconde ouverture (10) à travers la paroi du boîtier, et
- un dispositif d'aspiration (11) relié à la seconde ouverture pour créer un écoulement d'air passant à travers la première ouverture (2), dans le boîtier, jusqu'à l'intérieur de la cavité intérieure du boîtier.

2. Outil selon la revendication 1, **caractérisé en ce que** le bord de découpe (6) de la lame de découpe ou de chacune d'elles et le bord de découpe fixe (3) s'étendent dans la direction de l'axe de rotation (9).

3. Outil selon la revendication 1, **caractérisé en ce que** le bord de découpe fixe (3) s'étend principalement parallèlement à l'axe de rotation (9).

4. Outil selon la revendication 1, **caractérisé en ce que** le ou les bords de découpe (6) de la tête (4) s'étendent en formant un angle par rapport à l'axe de rotation (9), de préférence de telle sorte que l'interaction de découpe entre le bord de découpe fixe et un bord de découpe rotatif ait lieu successivement le long de ces bords de découpe.

5. Outil selon la revendication 4, **caractérisé en ce que** le ou les bords de découpe (6) de la tête (5) ont principalement une course hélicoïdale dans la direction de l'axe (9).

6. Outil selon la revendication 4, **caractérisé en ce que** le ou les bords de découpe de la tête de découpe, sur une première moitié de la tête située sur un premier côté d'un plan formant un angle droit par rapport à l'axe, s'étendent en formant un angle par rapport au premier côté et sur l'autre moitié de la tête située sur l'autre côté du plan, s'étendent en formant un angle égal dans la direction opposée.

7. Outil selon la revendication 1, **caractérisé en ce que** l'angle entre le côté d'attaque d'une lame (5) au niveau du bord de découpe (6) de la lame et la tangente à la surface de révolution que décrit le bord de découpe lors d'une rotation, vu dans un plan situé à angle droit par rapport à l'axe de rotation (9), est dans la plage de 45 à 90°, et de préférence dans la plage de 55 à 75°.

8. Outil selon la revendication 1, **caractérisé en ce que** la première ouverture (2) du boîtier, la tête de découpe (4) et la seconde ouverture (10) sont agencées de telle sorte que des parties tissulaires situées sur la surface d'une partie de carcasse opposée à la première ouverture (2), pendant un fonctionnement, sont aspirées dans la première ouverture, de sorte que les liaisons entre les parties tissulaires et la surface sont découpées à travers par l'interaction entre le bord de découpe fixe (3) et le ou les bords de découpe (6) de la tête (4) et **en ce que** les parties tissulaires séparées sont enlevées de la tête de découpe (5) et du boîtier (1) par l'écoulement d'air créé par le dispositif d'aspiration.

9. Outil selon la revendication 1, **caractérisé en ce que** les surfaces extérieures du boîtier au niveau de la première ouverture (2) et/ou des surfaces de glissement (14) montées sur le boîtier au niveau de la première ouverture constituent la surface de contact de l'outil avec la partie de carcasse pendant une utilisation et **en ce que** le ou les bords de découpe (6) de la tête de découpe (4) sont derrière un plan contenant cette surface de contact.

10. Outil selon la revendication 9, **caractérisé en ce que** la distance minimum du ou des bords de découpe (6) à partir de ce plan est de 1 à 8 mm.

11. Dispositif pour enlever des parties tissulaires à partir de la surface de parties de carcasse, **caractérisé en ce qu'**il comporte un outil selon la revendication 1, un agencement de support ou de fixation d'une partie de carcasse et un mécanisme pour déplacer l'outil opposé à l'agencement, ledit mécanisme supportant l'outil de manière élastique de sorte que l'outil peut s'éloigner de l'agencement lorsqu'il est affecté par une force l'éteignant de celui-ci.

12. Procédé pour enlever des parties tissulaires à partir de la surface de parties de carcasse, **caractérisé en ce qu'**un outil selon la revendication 1 est déplacé le long de la surface et en contact avec celle-ci en ayant son ouverture dirigée vers la surface, alors que la lame ou chaque lame de la tête de découpe est mise en rotation devant le bord fixe et le dispositif d'aspiration crée un écoulement d'air passant à travers la première ouverture (2), dans le boîtier, et jusqu'à l'intérieur de la cavité intérieure du boîtier.

## Patentansprüche

1. Werkzeug zum Entfernen von Gewebeteilen von der Oberfläche von Schlachttierkörperteilen, **dadurch gekennzeichnet, daß** es umfaßt:
- ein Gehäuse (1) mit einem inneren Hohlraum,
- eine erste Öffnung (2) durch die Wandung des Gehäuses mit einer stationären Schneidkante (3) an der inneren Seite des Gehäuses,
- einen Schneidkopf (4), der in dem Gehäusehohlraum gegenüber der ersten Öffnung (2) angeordnet ist, wobei der Schneidkopf eine oder mehrere Schneideklingen (5) aufweist, die, wenn sich der Schneidkopf um eine Drehachse (9) dreht, mit der stationären Schneidkante (3) zusammenwirken und durch Gewebeteile zwischen der stationären Schneidkante (3) und einer Schneidkante (6) an einer Schneidklinge (5) hindurchschneiden,
- eine zweite Öffnung (10) durch die Wandung des Gehäuses und
- eine Saugeinrichtung (11), die mit der zweiten Öffnung verbunden ist, um einen Luftstrom zu erzeugen, der durch die erste Öffnung (2) in dem Gehäuse in den inneren Hohlraum des Gehäuses hindurchtritt.

2. Werkzeug nach Anspruch 1, **dadurch gekennzeichnet, daß** sich die Schneidkante (6) an der oder jeder Schneidklinge und die stationäre Schneidkante (3) in Richtung der Drehachse (9) erstrecken.

3. Werkzeug nach Anspruch 1, **dadurch gekennzeichnet, daß** sich die stationäre Schneidkante (3) hauptsächlich parallel zur Drehachse (9) erstreckt.

4. Werkzeug nach Anspruch 1, **dadurch gekennzeichnet, daß** sich die Schneidkante (n) (6) des Kopfes (4) in einem Winkel zur Drehachse (9) erstreckt (en), und zwar vorzugsweise derart, daß das schneidende Zusammenwirken zwischen der stationären Schneidkante und einer rotierenden Schneidkante sukzessiv entlang dieser Schneidkanten stattfindet.

5. Werkzeug nach Anspruch 4, **dadurch gekennzeichnet, daß** die Schneidkante (n) (6) an dem Kopf (5) im wesentlichen einen schraubenwendelförmigen Verlauf in Richtung der Achse (9) aufweist (en).

6. Werkzeug nach Anspruch 4, **dadurch gekennzeichnet, daß** die Schneidkante (en) an dem Schneidkopf auf einer Hälfte des Kopfes, der sich auf einer Seite einer Ebene im rechten Winkel zur Achse befindet, sich im Winkel nach einer Seite und auf der anderen Seite des Kopfes, der auf der anderen Seite der Ebene liegt, sich in einem gleichen Winkel in entgegengesetzter Richtung erstreckt (en).

7. Werkzeug nach Anspruch 1, **dadurch gekennzeichnet, daß** der Winkel zwischen vorauslaufenden Seite einer Klinge (5) an der Schneidkante (6) der Klinge und die Tangente der Rotationskörperoberfläche, die die Schneidkante bei Drehung beschreibt, gesehen in einer Ebene im rechten Winkel zur Drehachse (9), im Bereich von 45 - 90°, und vorzugsweise im Bereich von 45 - 75°, liegt.

8. Werkzeug nach Anspruch 1, **dadurch gekennzeichnet, daß** die erste Öffnung (2) in dem Gehäuse, der Schneidkopf (4) und die zweite Öffnung (10) so angeordnet sind, daß Gewebeteile an der Oberfläche eines Schlachttierkörpers gegenüber der ersten Öffnung (2) während des Betriebs in die erste Öffnung hineingesaugt werden, daß die Verbindungen zwischen den Gewebeteilen und der Oberfläche durch das Zusammenwirken zwischen der stationären Schneidkante (3) und der/den Schneidkante/n (6) an dem Kopf (4) durchgeschnitten werden und daß die gelösten Gewebeteile von dem Schneidkopf (5) und dem Gehäuse (1) durch den mittels der Saugeinrichtung erzeugten Luftstrom entfernt werden.

9. Werkzeug nach Anspruch 1, **dadurch gekennzeichnet, daß** die äußeren Oberflächen des Gehäuses an der ersten Öffnung (2) und/oder Gleitflächen (14), die an dem Gehäuse an der ersten Öffnung angebracht sind, im Betrieb die Kontaktfläche des Werkzeugs mit dem Schlachttierkörperteil bilden und daß die Schneidkante (n) (6) an dem Schneidkopf (4) sich hinter einer Ebene befindet (n), in der diese Kontaktfläche liegt.

10. Werkzeug nach Anspruch 9, **dadurch gekennzeichnet, daß** der minimale Abstand der Schneidkante (n) (6) von dieser Ebene 1-8 mm beträgt.

11. Einrichtung zum Entfernen von Gewebeteilen von der Oberfläche von Schlachttierkörperteilen, **dadurch gekennzeichnet, daß** sie ein Werkzeug gemäß Anspruch 1, eine Halte- oder Befestigungsanordnung für ein Schlachttierkörperteil und einen Mechanismus zum Bewegen des Werkzeuges gegenüber der Anordnung umfaßt, wobei der Mechanismus das Werkzeug elastisch hält, so daß sich das Werkzeug von der Anordnung fort bewegen kann, wenn es von einer davon wegweisenden Kraft beeinflußt wird.

12. Verfahren zum Entfernen von Gewebeteilen von der Oberfläche von Schlachttierkörperteilen, **dadurch gekennzeichnet, daß** ein Werkzeug gemäß Anspruch 1 entlang und in Kontakt mit der Oberfläche bewegt wird, wobei seine Öffnung der Oberfläche zugewandt liegt, während die oder jede Klinge des Schneidkopfes rotierend an der stationären Kante vorbei bewegt wird und die Saugeinrichtung einen Luftstrom erzeugt, der durch die erste Öffnung (2) in dem Gehäuse hindurch- und in den inneren Hohlraum des Gehäuses eintritt.
